# EUROPÄISCHE PATENTSCHRIFT

(11) **EP 1 253 068 B1**
(45) Veröffentlichungstag und Bekanntmachung des Hinweises auf die Patenterteilung: **17.10.2007**
(21) Anmeldenummer: 02008354.9
(22) Anmeldetag: 12.04.2002
(51) Int. Cl.: B62D 25/10

(54) **Fahrzeugklappe**
Bonnet
Capot

(30) Priorität: 28.04.2001 DE 10121060
(43) Veröffentlichungstag der Anmeldung: 30.10.2002
(73) Patentinhaber: Bayerische Motoren Werke Aktiengesellschaft, 80809 München (DE)
(72) Erfinder: Tietel, Andreas, 81375 München (DE); Göhr, Heiko, 82269 Geltendorf (DE); Haas, Thorsten, 85716 Lohhof (DE)

(56) Entgegenhaltungen:
- EP-A- 1 004 497
- FR-A- 1 305 751
- PATENT ABSTRACTS OF JAPAN vol. 007, no. 024 (M-189), 29. Januar 1983 (1983-01-29) & JP 57 178925 A (NISSAN JIDOSHA KK), 4. November 1982 (1982-11-04)

## Beschreibung

Die Erfindung betrifft eine Fahrzeugklappe nach dem Oberbegriff des Patentanspruchs 1. Eine derartige Fahrzeugklappe ist aus EP-A-1004497 bekannt.

Allgemein sind Fahrzeugklappen bekannt, deren Außenblech durch ein Innenblech mit Aussparungen verstärkt ist. Die Aussparungen im Innenblech sollen das Gewicht der Fahrzeugklappe reduzieren. Das Innenblech ist üblicherweise mit dem Außenblech verklebt. Eine weitere derartige Fahrzeugklappe ist beispielsweise in der EP 634 316 A1 beschrieben und dargestellt.

Aufgabe der Erfindung ist es, die bekannten Fahrzeugklappen weiterzubilden, so daß eine kostengünstige Befestigung für eine Dichtung bereitgestellt wird.

Diese Aufgabe wird durch die Merkmale des Patentanspruchs 1 gelöst.

Eine Fahrzeugklappe mit einem Außenblech ist durch ein Innenblech mit Aussparungen verstärkt. Das Innenblech bildet mindestens einen U-profilförmigen Steg zwischen zwei Aussparungen, dessen geschlossene Seite am Außenblech anliegt. Als geschlossene Seite wird hier die Basisseite eines U-Profils bezeichnet, an die sich die beiden freien Schenkel anschließen. Durch diese U-profilförmigen Stege erhöht sich die allgemeine Steifigkeit und insbesondere die Beulsteifigkeit der Fahrzeugklappe stark. Dadurch können die Aussparungen relativ groß gestaltet werden, und somit das Gesamtgewicht der Fahrzeugklappe reduziert werden, ohne Beeinträchtigungen bezüglich der Steifigkeit in Kauf nehmen zu müssen. Damit verbunden ist eine Materialeinsparung, die zugleich auch mit einer Kosteneinsparung einhergeht.

Erfindungsgemäß ist auf einen abstehenden Schenkel mindestens eines U-profilförmigen Steges eine Dichtung aufsteckbar. Auch die Anbindung eines Schlosses und / oder eines Scharniers erfolgt günstigerweise direkt an einem U-profilförmigen Steg. Dadurch sind keine zusätzlichen Bauteile zur Anbringung der Dichtung, des Schlosses oder eines Scharniers erforderlich. Bei bekannten Fahrzeugklappen werden zur Anbringung des Schlosses beispielsweise zusätzliche Verstärkungsbleche angebracht. Die Reduzierung der benötigten Bauteile trägt zu Einsparungen bei den Material- und Fertigungskosten bei.

Die U-profilförmigen Stege können längs und quer zur Fahrtrichtung angeordnet werden. Idealerweise aber verläuft mindestens ein U-profilförmiger Steg in Fahrtrichtung gesehen diagonal unter dem Außenblech. Durch die diagonale Anordnung des Steges erhöht sich noch einmal Beulsteifigkeit der Fahrzeugklappe. Besonders vorteilhaft ist ein Innenblech, das zumindest in einem Bereich einen Rahmen bildet, der aus einem Netz diagonal verlaufender, U-profilförmiger Stege durchzogen ist. Ein derartiges Innenblech stellt erfindungsgemäß das Optimum an Versteifung der Fahrzeugklappe bezogen auf das eingesetzte Material und damit das eingesetzte Gewicht dar. Die Anordnung des Verlaufs der U-profilförmigen Stege kann so gestaltet werden, dass auch andere Anforderungen der Klappe gut erfüllt werden, wie zum Beispiel das Verhalten bei einem Unfall. Auch die Form der U-profilförmigen Stege, wie beispielsweise die Länge der Schenkel, die Breite des U-Profils oder der Abstand zur Außenhaut sind dafür maßgebend.

Eine erfindungsgemäße Fahrzeugklappe kann eine Tankklappe, eine Heckklappe oder eine Motorhaube sein. Bei einer Motorhaube dient günstigerweise eine auf einen U-profilförmigen Steg des Innenblechs aufgesteckte Dichtung zur Abdichtung der Motorhaube zum Motorraum.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Es zeigen in schematischer Darstellungsweise:
- **Fig.** 1: eine räumliche Ansicht eines erfindungsgemäßen Innenblechs einer Motorhaube,
- **Fig.** 2: einen Schnitt durch die Mitte der Motorhaube von **Fig.** 1 in Fahrzeuglängsrichtung und
- **Fig.** 3: eine Detailansicht des Schnitts von **Fig.** 2 im Bereich eines U-profilförmigen Steges.

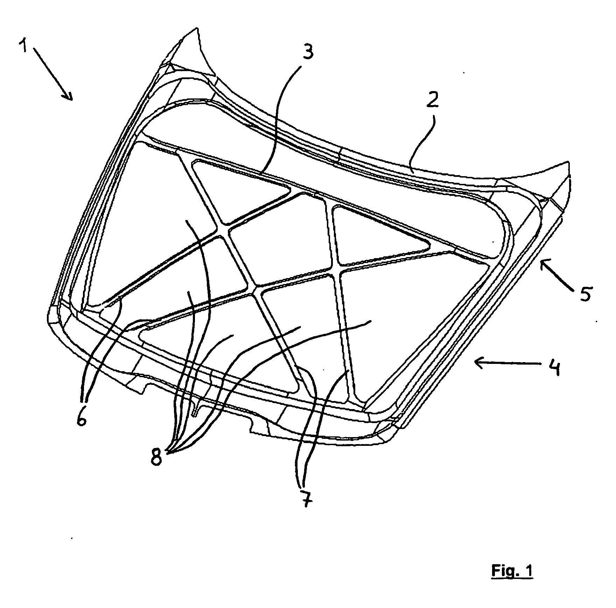

**Fig.** 1 zeigt ein Innenblech 1 einer Motorhaube eines Personenkraftwagens. Das Innenblech 1 bildet einen großen umlaufenden Rahmen 2, der mit einem Quersteg 3 in einen vorderen Bereich 4 und einen hinteren Bereich 5 unterteilt ist. Der vordere Bereich 4 ist von zwei diagonalen Stegen 6 durchzogen, die sich mit zwei weiteren diagonalen Stegen 7 kreuzen. Zwischen den Stegen 3, 6 und 7 untereinander und zwischen den Stegen 3, 6 und 7 und dem Rahmen 2 ist das Innenblech ausgespart. Diese Aussparungen 8 reduzieren das Gewicht des Innenblechs 1.

In **Fig.** 2 ist ein Längsschnitt durch die Mitte der Motorhaube 9 von **Fig.** 1 dargestellt. Das Innenblech 1 ist mit Unterfütterungskleber von unten an das Außenblech 10 geklebt. Der Rahmen 2 des Innenblechs 1 weist einen hutprofilförmigen Querschnitt auf. Die offene Seite des Querschnitts des Rahmens 2 ist dem Außenblech 10 zugewandt. Der Quersteg 3 und die diagonalen Stege 6 und 7 haben einen U-profilförmigen Querschnitt. Anders als beim Querschnitt des Rahmens 2 ist allerdings beim Querschnitt der Stege 3, 6 und 7 die geschlossene Seite der U-profilförmigen Querschnitte dem Außenblech 10 zugewandt. Auf dem in Fahrzeugrichtung hinteren, nach unten ragenden Schenkel 11 des U-profilförmigen Querstegs 3 ist eine Dichtung 12 aufgesteckt, die den Motorraum zum Frischluftansaugbereich für den Fahrzeuginnenraum nahe an der Fahrgastzelle abdichtet. Der Schenkel 11 hat eine größere Höhe als der andere Schenkel des U-profilförmigen Querstegs 3. Aufgrund der geschickten Gestaltung des Querstegs 3 mit einem U-profilförmigen Querschnitt, der nach unten offen ist, kann die Dichtung 12 ohne weitere Anbauteile direkt auf das Innenblech 1 bzw. den Quersteg 3 aufgesteckt werden.

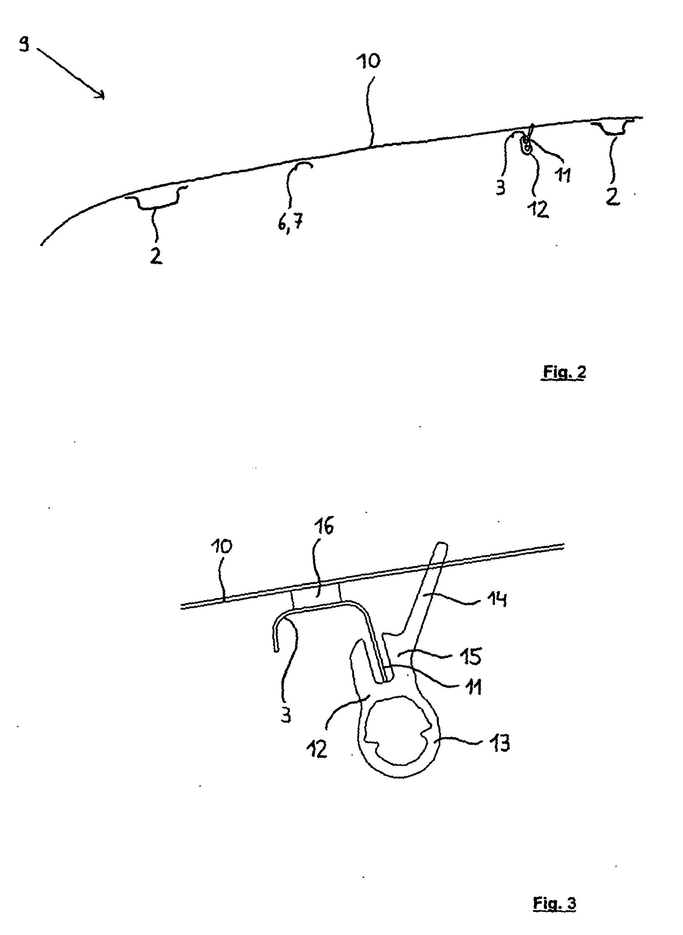

In **Fig.** 3 ist der Querschnitt durch den Quersteg 3 mit der aufgesteckten Dichtung 12 noch einmal vergrößert dargestellt. Die Dichtung 12 besteht im Wesentlichen aus drei Funktionsabschnitten. Einem Dichtballon 13, der zum Motorraum hin abdichtet, einer Dichtlippe 14, die zum Außenblech 10 hin abdichtet, und einem Dichtungsfuss 15, mit dem die Dichtung auf den Quersteg 3 aufgesteckt ist. Aufgrund der Dichtlippe 14 muss der U-profilförmige Quersteg 3 nicht mit einer kontinuierlichen Kleberaupe 16 auf dem Außenblech 10 aufgeklebt sein, sondern es genügen auch mehrere punktuelle Klebestellen. Dies spart Unterfütterungsklebstoff. Ferner ist das Aufstecken der Dichtung 12 ein Prozess, der leichter zu beherrschen und schneller durchführbar ist, als das Aufbringen von Unterfütterungsklebstoff.

Das Innenblech 1 versteift einerseits aufgrund der Anordnung der Stege 3, 6 und 7 wesentlich die Motorhaube 9, andererseits trägt es aufgrund der vielen Aussparungen 8 zur Gewichtsreduzierung bei.

## Patentansprüche

1. Fahrzeugklappe mit einem Außenblech, das durch ein Innenblech mit Aussparungen verstärkt ist, wobei das Innenblech (1) mindestens einen U-profilförmigen Steg (3, 6, 7) zwischen zwei Aussparungen (8) bildet, dessen geschlossene Seite am Außenblech (10) anliegt, **dadurch gekennzeichnet, daß** das Innenblech Aussparungen (8) hat und auf einen abstehenden Schenkel (11) mindestens eines U-profilförmigen Steges (3) eine Dichtung (12) aufsteckbar ist.

2. Fahrzeugklappe nach Anspruch 1, **dadurch gekennzeichnet, dass** mindestens ein U-profilförmiger Steg (6, 7) in Fahrtrichtung gesehen diagonal verläuft.

3. Fahrzeugklappe nach einem der vorhergehenden Ansprüche, **dadurch gekennzeichnet, dass** das Innenblech (1) zumindest in einem Bereich einen Rahmen (2) bildet, der aus einem Netz diagonal verlaufender, U-profilförmiger Stege (6, 7) durchzogen ist.

4. Fahrzeugklappe nach einem der vorhergehenden Ansprüche, **dadurch gekennzeichnet, dass** der Schenkel (11) des U-profilförmigen Steges (3), auf den die Dichtung (12) aufsteckbar ist, höher ist, als der andere Schenkel des U-profilförmigen Steges (3).

5. Fahrzeugklappe nach einem der vorhergehenden Ansprüche, **dadurch gekennzeichnet, dass** mindestens ein U-profilförmiger Steg (3, 6, 7) zur Anbindung eines Schlosses und / oder eines Scharniers dient.

6. Fahrzeugklappe nach einem der vorhergehenden Ansprüche, **dadurch gekennzeichnet, dass** die Fahrzeugklappe eine Motorhaube (9) ist.

7. Fahrzeugklappe nach Anspruch 6, **dadurch gekennzeichnet, dass** die Dichtung (12) die Motorhaube (9) zum Motorraum abdichtet.

## Claims

1. A flap or the like on a vehicle comprising an outer metal sheet reinforced by a recessed inner metal sheet, wherein the inner sheet (1) forms at least one U-profile web (3, 6, 7) between two recesses (8) and having a closed side abutting the outer sheet (10), **characterised in that** the inner sheet has recesses (8) and a seal (12) can be mounted on a projecting limb (11) of at least one U-profile web (3).

2. A flap according to claim 1, **characterised in that** at least one U-profile web (6, 7) runs diagonally, as considered in the direction of the vehicle.

3. A flap according to any of the preceding claims, **characterised in that** the inner sheet (1), at least in one region, forms a frame (2) crossed by a network of diagonal U-profile webs (6, 7).

4. A flap according to any of the preceding claims, **characterised in that** the limb (11) of the U-profile web (3) on which the seal (12) is mounted is higher than the other limb of the U-profile web (3).

5. A flap according to any of the preceding claims, **characterised in that** at least one U-profile web (3, 6, 7) is for connecting a lock and/or a hinge.

6. A flap according to any of the preceding claims, **characterised in that** the flap is a bonnet (9).

7. A flap according to claim 6, **characterised in that** the seal (12) seals the bonnet (9) from the engine space.

## Revendications

1. Capot de véhicule comportant une tôle extérieure renforcée par une tôle intérieure munie de découpes, la tôle intérieure (1) ayant au moins une entretoise (3, 6, 7) en forme de profil réalisée entre deux découpes (8) et dont le côté fermé est appliqué contre la tôle extérieure (10),
**caractérisé en ce que**
la tôle intérieure comporte des découpes (8) et, sur une branche (11) en saillie d'au moins une entretoise (3) en forme de profilé en U, un joint (12) est engagé.

2. Capot de véhicule selon la revendication 1,
**caractérisé en ce qu'**
au moins une entretoise (6, 7) en forme de profilé en U est disposée en diagonale par la rapport à la direction de déplacement.

3. Capot de véhicule selon l'une des revendications précédentes,
**caractérisé en ce que**
la tôle intérieure (1) forme au moins un cadre (2) dans une zone, ce cadre étant traversé par un réseau d'entretoises (6, 7) en forme de profilés en U disposés en diagonale.

4. Capot de véhicule selon l'une des revendications précédentes,
**caractérisé en ce que**
la branche (11) de l'entretoise (3) en forme de profil en U sur laquelle peut s'engager le joint (12) est plus haute que l'autre branche de cette entretoise (3) en forme de profil en U.

5. Capot de véhicule selon l'une des revendications précédentes,
**caractérisé en ce qu'**
au moins une entretoise en forme de profil en U (3, 6, 7) sert à la fixation d'une serrure et/ou d'une charnière.

6. Capot de véhicule selon l'une quelconque des revendications précédentes,
**caractérisé en ce que**
le capot du véhicule est le capot (9) du moteur.

7. Capot de véhicule selon la revendication 6,
**caractérisé en ce que**
le joint (12) assure l'étanchéité du capot du moteur (9) par rapport à l'enceinte du moteur.
